# FASCICULE DE BREVET EUROPEEN

(11) **EP 1 922 709 B1**
(45) Date de publication et mention de la délivrance du brevet: **27.02.2019**
(21) Numéro de dépôt: 06727439.9
(22) Date de dépôt: 23.03.2006
(51) Int. Cl.: G09B 23/26

(54) **PROCEDE DIDACTIQUE DE CONSTRUCTION DE MATRICES DESTINEES A LA REPRESENTATION DE MOLECULES DANS L'ESPACE**
DIDAKTISCHE METHODE ZUM KONSTRUIEREN VON FÜR RÄUMLICHE DARSTELLUNG VON MOLEKÜLEN AUSGELEGTEN MATRIZEN
DIDACTIC METHOD FOR CONSTRUCTING MATRICES DESIGNED FOR SPATIAL REPRESENTATION OF MOLECULES

(30) Priorité: 06.09.2005 OA 1200500327
(43) Date de publication de la demande: 21.05.2008
(73) Titulaire: Galledou, Bocar Sally, Dakar (SN)
(72) Inventeur: GALLEDOU, Mama, Tacko, Dakar (SN); GALLEDOU, Awa, Fatou, Dakar (SN); GALLEDOU, Papa, Sally, Dakar (SN); GALLEDOU, Oumou, Sally, Dakar (SN)
(74) Mandataire: Gauchet, Fabien Roland
(86) Numéro de dépôt international: PCT/IB2006/000814
(87) Numéro de publication internationale: WO 2007/029057

(56) Documents cités:
- CA-A1- 1 147 143
- US-A- 4 877 406
- US-A- 5 947 745

## Description

La présente invention a pour objet un procédé didactique de construction de matrices destinées à la représentation de molécules dans l'espace par la Méthode UAM-UCAD.

Les matrices sont des supports qui permettent de réaliser les différents états d'hybridations des atomes caractérisés par des valences de liaisons et des angles valentiels dans l'espace. Les états d'hybridations les plus utilisés en chimie organique sont dits :
- digonale (ou sp) : Valence 2, angle de 180°, Structure linéaire.
- trigonale (ou sp²) : Valence 3, angle de 120°, Structure plane.
- tétragonale ou tétraédrique (ou sp³) : Valence 4, angle de 109°28, Structure tétraédrique.

On déduira du sp² et du sp respectivement les hybridations bipyramide triangulaire sp³d (Valence 5, angles de 120° et 180°) et octaédrique sp³d² (Valence 6, angles de 90 et 180°). Les matrices permettent ainsi de représenter les atomes dans l'espace, puis dans leurs liaisons entre eux, les molécules en modèles moléculaires éclatés. Chaque état d'hybridation nécessite une matrice particulière.

Les kits (état d'hybridation) préfabriqués, notamment en fer ou en plastique, qui existent dans le commerce posent un problème au niveau de l'enseignement, car il n'existe pas de matrice permettant à l'étudiant de représenter lui-même dans l'espace, diverses molécules. De plus, le nombre de Kits contenus dans les emballages est limité et ne permet pas de réaliser à moindre coût, dans l'espace, des molécules complexes nécessitant plus d'atomes.

L'examen de l'état de la technique connue de l'inventeur, en rapport avec l'objet de la présente demande a permis d'identifier les documents de brevets ci- après :
- RO 92061 : Procédé de réalisation des modèles didactiques pour la représentation des structures moléculaires des cristaux.
- RO 71587 : Méthode et appareil didactique pour la simulation de la formation des liaisons covalentes.
- CA 949311 : Molecular models.
- EA 4831 : A set of éléments for assembling complex structurs.
- EP 1339035 : Molecular Structur Model.
- JP 2004309578 : Molecular Model manufacturing, method and member for manufacturing molecular model.
- GB 1496196 : Molecular Models.
- US 4 877 406 : Manipulatable, spherical educational and amusement devices
- US 5 947 745 : Atomic model of simultaneous electron-pair-sharing and allosterism.
- CA 1147143 : Model for demonstration of chemical bonding

Dans la littérature non brevet on peut citer les ouvrages ci-après :
- Henri KAGAN, la stéréochimie organique : Collection des Presses Universitaires de France.
- MAITLAND JONES Jr, organic chemistry: w.w. Norton et Company.
- J. MATHIEU et R. PANICO : Mécanismes réactionnels en Chimie organique deuxième Édition. Hermann.
- M. GARRIC , Chimie Générale : Dunod Université.

L'examen de cet état de la technique n'a pas donné d'éléments permettant de résoudre les problèmes évoqués, notamment la réalisation de matrices destinées à faciliter à n'importe quel utilisateur la représentation dans l'espace de molécules organiques.

La présente invention propose maintenant une méthode didactique de construction de matrices à partir de matériaux de base, qui est décrite ci-après dans les revendications.

La méthode didactique de construction de matrices, objet de la présente demande de brevet résout techniquement les difficultés liées à l'inexistence de matrices didactiques permettant la fabrication des différents types d'atomes dans leurs hybridations (sp, sp2, sp3, sp3d, sp3d2 et leurs assemblages).

La matrice, objet de la présente demande peut être confectionnée par tout utilisateur (étudiants, enseignants, chercheurs).

Les matériaux de base dont doit disposer l'utilisateur comprennent :
- un support pour le tracé préalable des contours de la matrice. Ce support peut-être une matière de synthèse (plastique, papier mâché cartonné etc...).
- du polystyrène expansé ou tout autre matériau de synthèse ou naturel qui sera utilisé pour représenter le module sphérique de l'atome dans lequel on peut enfoncer aisément une tige.
- des tiges en bois ou en fer ou en matière synthétique qui pourront créer des orifices dans le matériau. Elles vont représenter les liaisons entre les atomes.

Les dimensions de chaque matériau utilisé sont fonction de la matrice à construire.

L'utilisateur muni de ces différents outils peut lui-même en appliquant les différentes méthodes décrites ci-après, construire les matrices correspondantes aux différents états d'hybridations des atomes qui constituent une molécule.

### 1. - PROCEDE DE CONSTRUCTION DE LA MATRICE DE L'ATOME sp : HYBRIDATION DIGONALE : 180° PLANCHE I-III

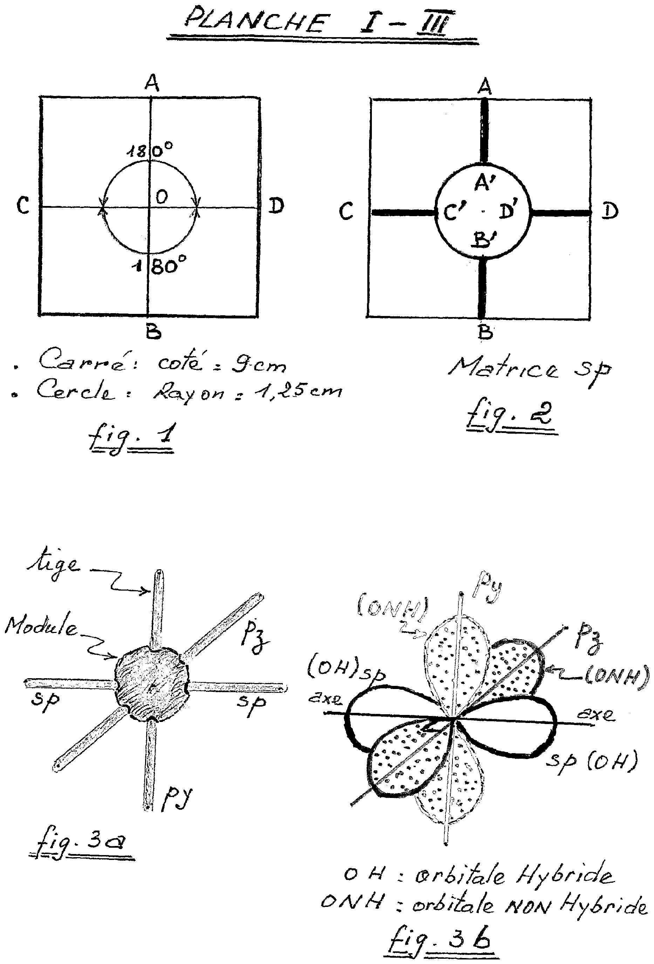

Au centre du support (papier mâché cartonné) carré de 9 cm de côté, on découpe un cercle de 1,25 cm de rayon. On trace les deux médiatrices AB et CD (planche 1 fig.1) qui relient les milieux des côtés opposés. On a ainsi les figures 1 et 2 qui indiquent :
- les deux segments [A'A] et [B 'B] (planche I fig.2) colinéaires forment un angle de 180° : ils représentent les deux axes des orbitales hybrides sp colinéaires.
- l'axe CD perpendiculaire à l'axe des orbitales hybrides, est celui d'une des deux orbitales non hybrides (soit Py).
- l'axe de la deuxième orbitale non hybride (soit Pz) est centré en "O" au milieu du cercle et perpendiculaire au plan du support qui porte les deux orbitales hybrides (sp) et la non hybride (Py).

La figure 2 représente la matrice sp conforme à l'invention.

### 2. - MODE D'UTILISATION DE LA MATRICE SP

On place au centre du carré (planche I fig.2) un module sphérique en polystyrène expansé de même diamètre que celui du cercle. En maintenant bien le polystyrène dans l'axe du cercle, on enfonce deux tiges des deux côtés opposés (A et B) de la matrice suivant les deux segments colinéaires [AA'] et [BB'] (180°). On matérialise ainsi sur l'axe portant AB, les 2 axes des orbitales hybrides sp par ces 2 tiges.

Sans retirer le module, on enfonce à nouveau deux tiges des deux côtés opposés (C et D) de la matrice suivant les 2 segments colinéaires [CC'] et [DD'] (180°) qui forment l'axe de l'orbitale non hybride Py.

Le module avec les tiges est retiré, puis replacé dans le cercle de telle sorte que deux tiges colinéaires (180°) soient bien superposées sur la droite AB (ou CD). Maintenu dans cette position, on enfonce dans le matériau 2 tiges suivant les deux segments [CC'] et [DD'] (ou [AA'] et [BB']). Ces deux tiges vont constituer l'axe de la deuxième orbitale non hybride Pz.

Finalement les 2 axes des 2 orbitales non hybrides (Py et Pz) et l'axe portant les 2 orbitales hybrides sont perpendiculaires deux à deux, on a ainsi l'hybridation sp (fig3a planche I) selon l'invention. Le schéma de l'état d'hybridation sp est représenté par la figure 3b. Planche I.

Dans la représentation des molécules dans l'espace, les deux orbitales non hybrides ne seront pas utilisées ; la structure linéaire de l'atome explique leur rôle dans la formation de la triple liaison.

De cette matrice on peut construire l'état d'hybridation octaédrique sp³d².

### 3. - PROCEDE DE CONSTRUCTIION DE LA MATRICE DE L'ATOME sp² :HYBRIDATION TRIGONALE : 120°(PLANCHE II-III)

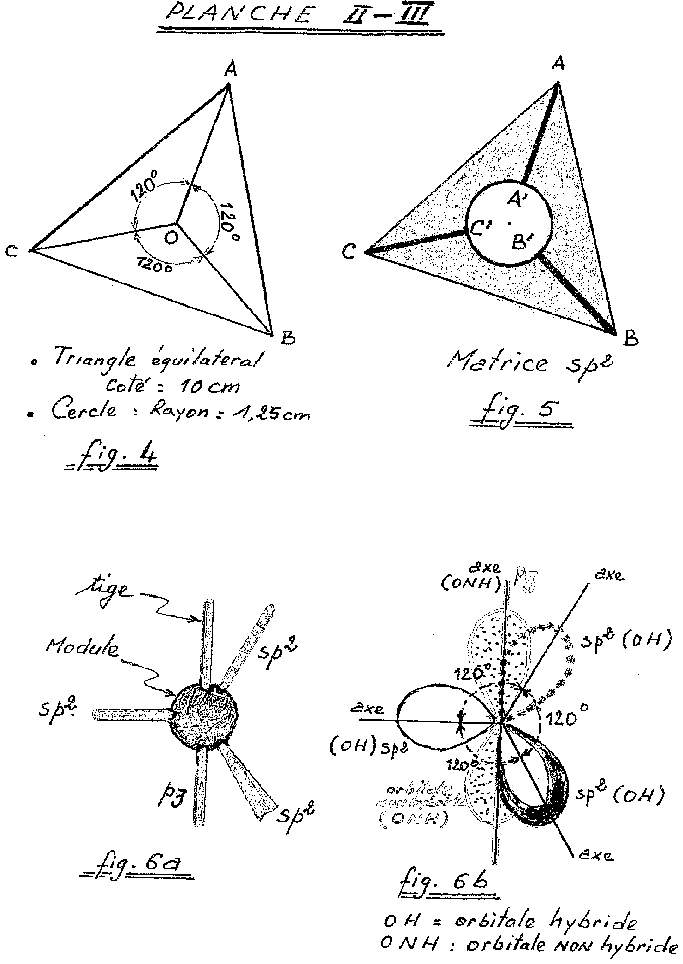

Au centre d'un support (papier maché cartonné) triangulaire équilatéral de 10 cm de côté, on découpe un cercle de 1,25 cm de rayon. On trace la bissectrice de chacun des 3 angles du triangle équilatéral, soit OA, OB et OC ces bissectrices (voir planche II, fig. 4 et 5). Ainsi :
- les segments [OA], [OB], [OC] figure 4, planche II (ou [A'A], [B'B] et [C'C] figure 5, planche II) font entre eux des angles de 120° et représentent les axes des 3 orbitales hybrides sp² qui forment le plan du support.
- l'axe (Pz) de l'orbitale non hybride sera centré en «O» figure 4, planche II, au milieu du cercle et perpendiculaire à ce plan du carton.
   La figure 5, planche II, représente la matrice sp² conforme à l'invention.

### 4. MODE D'UTILISATION DE LA MATRICE SP²

On place au centre de la matrice sp² (planche II fig. 5) un module sphérique en polystyrène expansé de même diamètre que le cercle. Bien maintenu, sans jeu, on enfonce trois tiges dans le matériau suivant les 3 segments [AA'], [BB'], [CC']. Ces 3 tiges forment entre elles des angles égaux de 120° dans le même plan et constituent les axes des 3 orbitales hybrides sp².

On sort le module garni de ses 3 tiges de la matrice sp², puis on le replace au centre de la matrice sp (planche I fig. 2) de telle sorte que deux tiges soient dans l'axe de la droite AB, ensuite au centre du matériau, on enfonce deux tiges colinéaires suivant les segments [CC'], [DD']. Ces deux tiges sont situées sur un axe qui est perpendiculaire au plan formé par les 3 premières tiges : cet axe représente celui de l'orbitale non hybride « Pz ».

On sort le module de la matrice, ainsi on matérialise l'hybridation sp² (fig6a, planche II), selon l'invention, elle comprend les 3 axes des 3 orbitales hybrides sp² dans un plan et un axe de l'orbitale non hybride « Pz » perpendiculaire à ce plan (les 2 tiges colinéaires). Le schéma de l'état d'hybridation sp² est représenté par (la figure 6b. Planche II).

Dans la représentation spatiale des molécules, cette orbitale « Pz » non hybride ne sera pas utilisée, c'est la structure plane de l'atome qui implique son rôle dans la formation d'une double liaison, à partir de cette matrice on peut construire l'état d'hybridation sp³d.

### 5. - PROCEDE DE CONSTRUCTION DE LA MATRICE DE L'ATOME SP³ : HYBRIDATION TETRAEDRIQUE : 109° (PLANCHE III-III)

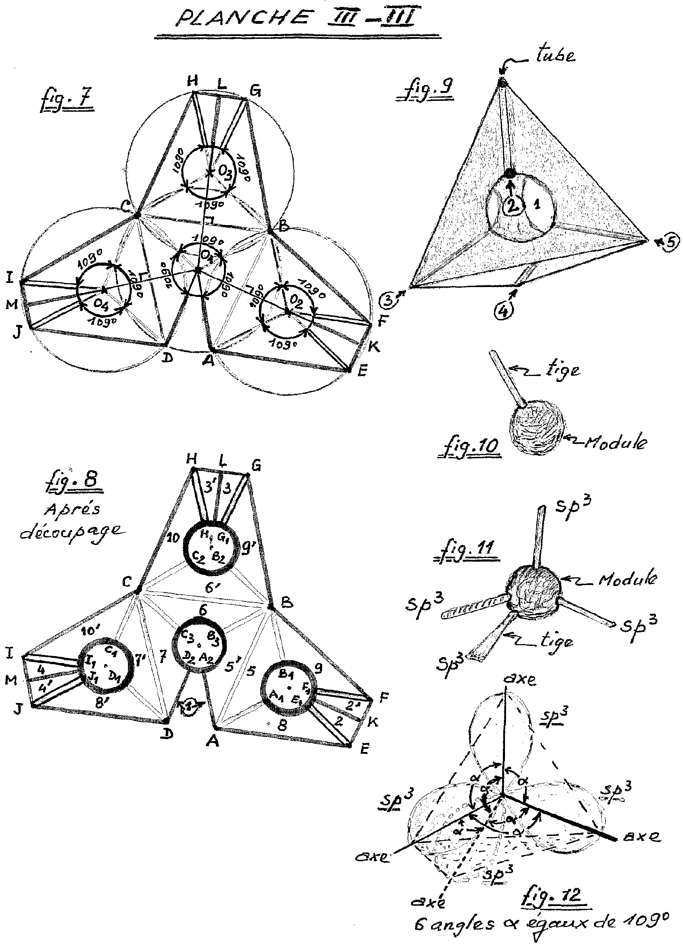

### 5 - 1 - Phase préparatoire (Planche III fig.7)

Du point O₁ (planche III, fig. 7), on trace un cercle de 1,25 cm de rayon, un cercle de 5 cm de rayon, puis trois angles au centre égaux et adjacents de 109°. Ces angles délimités par les rayons du cercle sont : AÔ₁B, BÔ₁C, CÔ₁D. En reliant les segments [AB], [BC], [CD], on a trois triangles isocèles égaux avec le rayon du cercle.

On trace la médiatrice des segments [AB], [BC], [CD] ; et sur chacune aux points respectifs O₂, O₃, O₄, on dessine trois cercles de même rayon (5 cm) que le premier et qui passent respectivement par les extrémités de chacun des 3 segments.

Dans chaque cercle on construit comme précédemment dans le premier cercle :
- 3 angles aux centres (O₂, O₃, O₄) égaux et adjacents de 109°.
- On joint les 4 points (A, B, F, E) ; (B, C, H, G) ; (C, D, J, I) qui délimitent dans chaque cercle, les trois angles égaux adjacents de 109°.

On trace : les bissectrices des angles EÔ₂F, GÔ₃H, IÔ₄J ; et aux centres O₂, O₃, O₄, trois cercles de rayon 1,25 cm.

A partir de ce schéma il y a 2 voies :
1°) - une option de confectionner une matrice didactique en papier maché cartonné, par l'enseignant et l'apprenant.
2°) - une option de fabriquer une matrice industriellement en fer, ou en bois ou en matière synthétique.

### 5 - 2 - OPTION : CONSTRUCTION DE LA MATRICE DIDACTIQUE EN PAPIER MACHE CARTONNE : sp³ (PLANCHE III, FIG. 7,8,9)

1°) - Afin de plier facilement en ligne droite le support cartonné, on y trace un trait appuyé (ou, à l'aide d'un cutter on l'incise légèrement), suivant les segments [AB], [O₁B], [BC], [O₁C], [CD], [O₂A], [O₂E], [O₂F], [O₂B], [O₃B], [O₃G], [O₃H], [O₃C], [O₄C], [O₄D], [O₄I], [O₄J], (fig. 7 planche III, tracé rouge). Ensuite on plie suivant chaque segment avant l'assemblage. (Voir aussi tracé rouge de la fig.8 planche III)
2°) - A 1,5 mm de part et d'autre et parallèlement aux segments [O₂E], [O₂F], [O₃G], [O₃H], [O₄I), [O₄J] (fig.7 planche III en tracé noir), on trace deux traits très appuyés (ou on incise à l'aide d'un cutter comme indiqué plus haut). Les deux traits parallèles à chaque segment sont pliés dans le même sens afin de créer une encoche qui épousera la forme du tube qui sera inséré dans la phase assemblage (voir tracé noir de la fig.8)
3°) -On découpe les bissectrices : O₂K, O₃L, O₄M ; les segments [O₁A], [AE], [EF], [FB], [BG], [GH], [HC], [CI], [IJ], [JD], [DO₁] ; et enfin les quatre cercles de rayon 1,25 cm centrés en O₁, O₂, O₃ et O₄. (planche III, fig.7 et fig.8, tracé vert)
4°) - On joint les segments [AA₂] et [DD₂] (planche III, fig.8, suivant -1) pour avoir la base du tétraèdre formant une Pyramide dont les 3 faces latérales font des angles de 109° donc délimités par 3 liaisons sigma dans l'espace non plan.
5°) - On prépare un tube de 3,5 cm de long pouvant contenir juste la tige utilisée pour les liaisons.
6°) - On applique de la colle sur les 3 faces latérales de la base (Pyramide) et sur les 3 surfaces (ABFE), (BGHC), (CIJD) et on assemble les surfaces (voir fig.8 planche III) :
   - 2 et 2' enjoignant les segments [FF₁] et [EE₁]
   - 3 et 3' en joignant les segments [HH₁] et GG₁]
   - 4 et 4'en joignant les segments [II₁] et [JJ₁]
7°) - On assemble en pliant suivant les segments [AB], [BC], [CD] pour rabattre les surfaces 5 sur 5', 6 sur 6', 7 sur 7', 8 sur 8', 9 sur 9', 10 sur 10'.

On place le tube (qui représente la 4ème liaison sigma) à l'intersection des 3 parties rabattues, à la jonction des segments [EB_{1]}, [FF₁], [GG₁], [HH₁], [II₁] et [JJ₁], vers le sommet du tétraèdre. Il faut manier de telle sorte que le tube soit bien enrobé dans les encoches aménagées. Le tube doit être perpendiculaire au plan portant la base du tétraèdre, et situé au milieu du cercle obtenu après l'assemblage:

Quand tout est correct, à savoir la 4ème liaison bien constituée, on laisse bien sécher.

Ensuite on coupe les deux parties du tube qui débordent vers le centre et le sommet du tétraèdre : La matrice est prête à l'emploi.
La fig. 9 de la Planche III, représente la matrice sp³ conforme à l'invention.

Cette matrice sp³ est appelée Tétraèdre de Gallédou.

Au plan industriel les mêmes principes sont applicables pour la construction de la matrice sp³.

### 6. - MODE D'UTILISATION DE LA MATRICE sp³ : Tétraèdre de Gallédou : (Planche III, fig. 9, 10, 11, 12)

On enfonce une tige en un point du matériau module sphérique (fig. 10, planche III) de même diamètre que celui du cercle au centre du tétraèdre. La partie externe de la tige est placée dans le petit tube (en 2 fig. 9 planche III) à travers le centre du tétraèdre, de telle sorte que le module bien situé au centre du tétraèdre et bien maintenu, puisse recevoir 3 tiges suivant les directions des 3 rainures (en 3, 4, 5, fig.9) qui font les angles de 109° de la base du tétraèdre.

Le module portant les 4 tiges est sorti de la matrice sp³. On a ainsi une hybridation sp3selon l'invention (fig.11, planche III). Le schéma de l'état d'hybridation sp³ est représenté par la (fig. 8. Planche III).

## Revendications

1. Méthode didactique de construction de matrices destinées à la représentation de molécules dans l'espace, réalisée par assemblage de matériaux de base comprenant :
- des tiges représentant des liaisons entre les atomes,
- un module sphérique constitué d'un matériau où l'on peut enfoncer ledites tiges ;
- un support pouvant recevoir en son centre ledit module sphérique, et permettant de réaliser les différents états d'hybridation sp, sp², sp³ des atomes **caractérisés par** des valences de liaisons et des angles valentiels dans l'espace,
**caractérisée en ce que** le support est choisi parmi :
a) un carré sur lequel sont tracées deux médiatrices reliant les milieux des côtés opposés, ledit carré présentant un cercle découpé en son centre recevant le module sphérique représentant l'atome sp, et lesdites médiatrices guidant le positionnement des tiges représentant les liaisons entre les atomes qui sont enfoncées dans ledit module sphérique ;
b) un triangle équilatéral sur lequel sont tracées les bissectrices de chacun des 3 angles du triangle, ledit triangle présentant un cercle découpé en son centre recevant le module sphérique représentant l'atome sp², et lesdites bissectrices guidant le positionnement des tiges représentant les liaisons entre les atomes qui sont enfoncées dans ledit module sphérique ;
c) un tétraèdre présentant un cercle découpé au centre de chacune de ses faces, lesdits cercles constituant au centre dudit tétraèdre un orifice sphérique recevant le module sphérique représentant l'atome sp³, le sommet dudit tétraèdre comprenant un tube inséré perpendiculairement au plan portant la base du tétraèdre, ledit tube recevant l'une des tiges représentant les liaisons entre les atomes préalablement enfoncée en un point du module sphérique, et la base dudit tétraèdre formant une pyramide dont les 3 faces latérales font des angles de 109°, les arêtes entre lesdites faces constituant des rainures guidant le positionnement des 3 autres tiges représentant les liaisons entre les atomes qui sont enfoncées dans ledit module sphérique.

2. Méthode didactique de construction de matrices selon la revendication 1, **caractérisée en ce que** :
- le support peut être en matière de synthèse, de préférence en papier mâché cartonné ou en plastique,
- le module sphérique est en matériau de synthèse ou naturel, de préférence en polystyrène expansé,
- les tiges sont en bois, en fer ou en matière de synthèse.

3. Méthode didactique de construction de matrices selon la revendication 1 **caractérisée en ce que** la construction de la matrice de l'atome sp est réalisée à partir d'un support carré, de 9 cm en papier mâché cartonné sur lequel on découpe au centre un cercle de 1,25 cm de rayon destiné à recevoir le module sphérique représentant l'atome sp.

4. Méthode didactique de construction de matrices selon la revendication 1 **caractérisée en ce que** la construction de la matrice sp² est réalisée à partir d'un support triangulaire équilatéral de 10 cm de côté en papier mâché cartonné sur lequel on découpe au centre un cercle de 1,25 cm de rayon destiné à recevoir le module sphérique représentant l'atome sp².

5. Méthode didactique de construction de matrices selon la revendication 1 **caractérisée en ce qu'**à partir d'un support en papier mâché cartonné, on réalise un tétraèdre ayant des angles de 109°, dont le centre constitué d'un orifice sphérique de 1,25 cm de rayon est destiné à recevoir le module sphérique représentant l'atome sp³.

6. Matériaux de base pour la construction de matrices destinées à la représentation de molécules dans l'espace selon la méthode de la revendication 1, lesdits matériaux comprenant :
- des tiges représentant des liaisons entre les atomes,
- un module sphérique constitué d'un matériau où l'on peut enfoncer ledites tiges ;
- un support pouvant recevoir en son centre ledit module sphérique, et permettant de réaliser les différents états d'hybridation sp, sp², sp³ des atomes **caractérisés par** des valences de liaisons et des angles valentiels dans l'espace,
**caractérisés en ce que** le support est choisi parmi :
a) un carré sur lequel sont tracées deux médiatrices reliant les milieux des côtés opposés ledit carré présentant un cercle découpé en son centre destiné à recevoir le module sphérique représentant l'atome sp et lesdites médiatrices permettant de guider le positionnement des tiges représentant les liaisons entre les atomes, ;
b) un triangle équilatéral sur lequel sont tracées les bissectrices de chacun des 3 angles du triangle, ledit triangle présentant un cercle découpé en son centre destiné à recevoir le module sphérique représentant l'atome sp², et lesdites bissectrices permettant de guider le positionnement des tiges représentant les liaisons entre les atomes ;
c) un tétraèdre présentant un cercle découpé au centre de chacune de ses faces, lesdits cercles constituant au centre dudit tétraèdre un orifice sphérique destiné à recevoir le module représentant l'atome sp³, le sommet dudit tétraèdre comprenant un tube inséré perpendiculairement au plan portant la base du tétraèdre, ledit tube permettant l'insertion d'une des tiges représentant les liaisons entre les atomes, et la base dudit tétraèdre formant une pyramide dont les 3 faces latérales font des angles de 109°, les arêtes entre lesdites faces constituant des rainures permettant de guider le positionnement des 3 autres tiges représentant les liaisons entre les atomes.

7. Matériaux de base selon la revendication 6, **caractérisés en ce que** :
- le support est en matière synthétique, de préférence en papier mâché cartonné ou en plastique,
- le module sphérique est en matériau de synthèse ou naturel, de préférence en polystyrène expansé,
- lesdites au moins une tige sont en bois, en fer ou en matière de synthèse.

8. Matériaux de base selon l'une des revendications 6 ou 7, **caractérisés en ce que** la matrice est préfabriquée industriellement en fer, ou en bois ou en matière synthétique.

9. Matériaux de base selon l'une des revendications 6 à 8, **caractérisés en ce que** les tiges peuvent créer des orifices dans le matériau du module sphérique.

## Patentansprüche

1. Didaktische Methode zum Konstruieren von Matrizen, zur räumlichen Darstellung von Molekülen durch das Zusammensetzen von Grundmaterialien, welche folgendes umfassen:
- Stäbe, welche die Bindungen zwischen den Atomen darstellen,
- ein sphärisches Modul, bestehend aus einem Material, in welches man die Stäbe hineinschieben kann;
- einen Träger, der besagtes sphärisches Modul in der Mitte aufnehmen kann und die Herstellung der verschiedenen Hybridisierungszustände sp, sp², sp³ der Atome ermöglicht, welche durch die Bindungsvalenzen und die räumlichen Valenzwinkel charakterisiert werden, **dadurch gekennzeichnet, dass** der Träger ausgewählt wird aus:
a) einem Quadrat, auf welchem zwei Mittelsenkrechten angezeichnet werden, welche die Mitten der gegenüberliegenden Seiten miteinander verbinden, wobei besagtes Quadrat in der Mitte einen ausgeschnittenen Kreis aufweist, der das sphärische, das Atom sp darstellende Modul aufnimmt, wobei besagte Mittelsenkrechten die Positionierung der Stäbe, welche die Bindungen zwischen den Atomen darstellen und in besagtes sphärisches Modul hineingeschoben sind, führen;
b) einem gleichschenkligen Dreieck, auf welchem die Halbierungslinien jeder der 3 Winkel des Dreiecks angezeichnet werden, wobei besagtes Dreieck einen in der Mitte ausgeschnittenen Kreis aufweist, in dem das sphärische, das Atom sp² darstellende Modul aufgenommen wird, und besagte Halbierungslinien die Positionierung der Stäbe, welche die Bindungen zwischen den Atomen darstellen und in besagtes sphärisches Modul hineingeschoben sind, führen;
c) einem Tetraeder, der in der Mitte jeder seiner Seiten einen ausgeschnittenen Kreis aufweist, wobei besagte Kreise in der Mitte des besagten Tetraeders einer sphärische Öffnung bilden, in welcher das sphärische, das Atom sp³ darstellende Modul aufgenommen wird, wobei die Spitze des besagten Tetraeders ein senkrecht zur Ebene der Tetraederbasis eingeschobenes Rohr umfasst, wobei besagtes Rohr einen der Stäbe, welche die Bindungen zwischen den Atomen darstellen und zuvor an einem Punkt des sphärischen Moduls eingeschoben wurden, aufnimmt, und die Basis des besagten Tetraeders einer Pyramide bildet, deren drei Seitenflächen Winkel von je 109° bilden, wobei die Kanten zwischen den besagten Flächen Rillen bilden, welche die Positionierung der drei anderen Stäbe, welche die Bindungen zwischen den Atomen darstellen und in besagtes sphärisches Modul hineingeschoben sind, führen.

2. Didaktische Methode zum Konstruieren von Matrizen nach Anspruch 1, **dadurch gekennzeichnet, dass**:
- der Träger aus synthetischem Material, vorzugsweise aus Pappmaschee oder Kunststoff bestehen kann,
- das sphärische Modul aus einem synthetischen oder natürlichen Material, vorzugsweise aus Polystyrol-Schaumstoff besteht,
- die Stäbe aus Holz, Eisen oder synthetischem Material bestehen.

3. Didaktische Methode zum Konstruieren von Matrizen nach Anspruch 1, **dadurch gekennzeichnet, dass** die Matrize des Atoms sp mithilfe eines quadratischen, 9 cm großen Trägers aus Pappmaschee konstruiert wird, auf dem man in der Mitte einen Kreis mit einem Radius von 1,25 cm zur Aufnahme des sphärischen, das Atom sp darstellenden Moduls ausschneidet.

4. Didaktische Methode zum Konstruieren von Matrizen nach Anspruch 1, **dadurch gekennzeichnet, dass** die Matrize sp² mithilfe eines Trägers in Form eines gleichschenkligen Dreiecks mit einer Seitenlänge von jeweils 10 cm aus Pappmaschee konstruiert wird, aus dem man in der Mitte einen Kreis mit einem Radius von 1,25 cm zur Aufnahme des sphärischen, das Atom sp² darstellenden Moduls ausschneidet.

5. Didaktische Methode zum Konstruieren von Matrizen nach Anspruch 1, **dadurch gekennzeichnet, dass** man mithilfe eines Trägers aus Pappmaschee einen Tetraeder mit den Winkeln von 109° herstellt, dessen Mitte bestehend aus einer sphärischen Öffnung mit einem Radius von 1,25 cm dazu bestimmt, das sphärische, das Atom sp³ darstellende Modul aufzunehmen.

6. Grundmaterial zum Konstruieren von Matrizen zur räumlichen Darstellung von Molekülen nach der Methode von Anspruch 1, wobei besagte Materialien folgendes umfassen:
- Stäbe, welche die Bindungen zwischen den Atomen darstellen,
- ein sphärisches Modul, bestehend aus einem Material, in welches man besagte Stäbe hineinschieben kann;
- einen Träger, der besagtes sphärisches Modul in der Mitte aufnehmen kann und die Herstellung der verschiedenen Hybridisierungszustände sp, sp², sp³ der Atome ermöglicht, welche durch die Bindungsvalenzen und die räumlichen Valenzwinkel charakterisiert werden, **dadurch gekennzeichnet, dass** der Träger ausgewählt wird aus:
a) einem Quadrat, auf welchem zwei Mittelsenkrechten angezeichnet werden, welche die Mitten der gegenüberliegenden Seiten miteinander verbinden, wobei besagtes Quadrat in der Mitte einen ausgeschnittenen Kreis aufweist, der das sphärische, das Atom sp darstellende Modul aufnimmt, wobei besagte Mittelsenkrechten die Führung der Positionierung der Stäbe, welche die Bindungen zwischen den Atomen darstellen, ermöglichen;
b) einem gleichschenkligen Dreieck, auf welchem die Halbierungslinien jeder der 3 Winkel des Dreiecks angezeichnet werden, wobei besagtes Dreieck einen in der Mitte ausgeschnittenen Kreis aufweist, in dem das sphärische, das Atom sp² darstellende Modul aufgenommen wird, und besagte Halbierungslinien die Führung der Positionierung der Stäbe, welche die Bindungen zwischen den Atomen darstellen, ermöglichen;
c) einem Tetraeder, der in der Mitte jeder seiner Seiten einen ausgeschnittenen Kreis aufweist, wobei besagte Kreise in der Mitte des besagten Tetraeders eine sphärische Öffnung bilden, in welcher das sphärische, das Atom sp³ darstellende Modul aufgenommen wird, wobei die Spitze des besagten Tetraeders ein senkrecht zur Ebene der Tetraederbasis eingeschobenes Rohr umfasst, wobei besagtes Rohr das Einschieben einer der Stäbe, welche die Bindungen zwischen den Atomen darstellen, ermöglicht und die Basis des besagten Tetraeders eine Pyramide bildet, deren 3 Seitenflächen Winkel von 109° bilden, wobei die Kanten zwischen den besagten Flächen Rillen bilden, welche die Führung der Positionierung der drei anderen Stäbe, welche die Bindungen zwischen den Atomen darstellen, ermöglichen.

7. Grundmaterial nach Anspruch 6, **dadurch gekennzeichnet, dass**:
- der Träger aus synthetischem Material, vorzugsweise aus Pappmaschee oder Kunststoff besteht,
- das sphärische Modul aus einem synthetischen oder natürlichen Material, vorzugsweise aus Polystyrol-Schaumstoff besteht,
- der mindestens eine Stab aus Holz, Eisen oder synthetischem Material bestehen.

8. Grundmaterial nach Anspruch 6 oder 7, **dadurch gekennzeichnet, dass** die Matrizen industriell aus Eisen oder Holz oder einem synthetischen Material vorgefertigt sind.

9. Material nach einem der Ansprüche 6 bis 8, **dadurch gekennzeichnet, dass** die Stäbe im Material des sphärischen Moduls Öffnungen erzeugen können.

## Claims

1. A didactic method for constructing matrices designed for spatial representation of molecules produced by assembling base materials comprising:
- rods representing links between the atoms,
- a spherical module made of a material into which said rods can be driven;
- a support which can receive, in the center thereof, said spherical module and which makes it possible to produce the different hybridizing states sp, sp², sp³ of the atoms **characterized by** link valences and valence angles in space,
**characterized in that** the support is selected among:
a) a square whereon two bisectors linking the middle of opposite sides are drawn, with said square having, in the centre thereof, a circle which is cut and is intended to receive the spherical module representing the links between the atoms which are driven into said spherical module;
b) an equilateral triangle whereon the bisectors of each one of the 3 angles of the triangle are drawn, with said triangle having, in the center thereof, a circle which is cut and is intended to receive the spherical module representing the atom sp², and said bisectors guiding the positioning of the rods representing the links between the atoms which are driven into said spherical module;
c) a tetrahedron having a circle cut in the center of each of the faces thereof, with said circles in the centre of said tetrahedron being a spherical hole intended to receive the spherical module representing the atom sp³, with the apex of said tetrahedron comprising a tube which is inserted perpendicularly to the plane of the base of the tetrahedron, with said tube receiving one of the rods representing the links between the atoms previously driven at one point of the spherical module, and the base of said tetrahedron forming a pyramid, the 3 side faces of which form angles of 109°, with the edges between said faces forming grooves which guide the positioning of the 3 other rods which represent the links between the atoms which are driven into said spherical module.

2. A didactic method for constructing matrices according to claim 1, **characterized in that**:
- the support can be made of synthetic material, preferably of hard paper mache or of plastic material,
- the spherical module is made of a synthetic or natural material, preferably of expanded polystyrene,
- the rods are made of wood, of iron or of a synthetic material.

3. A didactic method for constructing matrices according to claim 1, **characterized in that** the matrix of the atom sp is produced from a 9cm square support made of hard paper mache, at the center of which a spherical hole with a radius of 1.25cm is cut and is intended to receive the spherical module representing the atom sp.

4. A didactic method for constructing matrices according to claim 1, **characterized in that** the matrix sp² is produced from a support having the shape of an equilateral triangle, with a side of 10cm, made of hard paper mache, in the center of which a circle having a radius of 1.25cm is cut and is intended to receive the spherical module representing the atom sp².

5. A didactic method for constructing matrices according to claim 1, **characterized in that** a tetrahedron having angles of 109°, the center of which, which consists of a spherical hole with a radius of 1.25cm, is intended to receive the spherical module representing the atom sp³ is produced from a hard paper mache support.

6. Base materials for constructing matrices designed for spatial representation of molecules according to the method of claim 1, with said materials comprising:
- rods representing links between the atoms,
- a spherical module made of a material into which said rods can be driven;
- a support which can receive, in the center thereof, said spherical module and which makes it possible to produce the different hybridizing states sp, sp², sp³ of the atoms **characterized by** link valences and valence angles in space,
**characterized in that** the support is selected among:
a) a square whereon two bisectors linking the middle of opposite sides are drawn, with said square having, in the centre thereof, a circle which is cut and is intended to receive the spherical module representing the atom sp and said bisectors making it possible to guide the positioning of the rods representing the links between the atoms;
b) an equilateral triangle whereon the bisectors of each one of the 3 angles of the triangle are drawn, with said triangle having, in the center thereof, a circle which is cut and is intended to receive the spherical module representing the atom sp², and said bisectors making it possible to guide the positioning of the rods representing the links between the atoms;
c) a tetrahedron having a circle cut in the center of each of the faces thereof, with said circles in the centre of said tetrahedron being a spherical hole intended to receive the module representing the atom sp³, with the apex of said tetrahedron comprising a tube which is inserted perpendicularly to the plane of the base of the tetrahedron, with said tube making it possible to insert one of the rods representing the links between the atoms, and the base of said tetrahedron forming a pyramid, the 3 side faces of which form angles of 109°, with the edges between said faces forming grooves making it possible to guide the positioning of the 3 other rods which represent the links between the atoms.

7. Base materials according to claim 6, **characterized in that**:
- the support is made of a synthetic material, preferably of hard paper mache or of plastic,
- the spherical module is made of a synthetic or natural material, preferably expanded polystyrene,
- said at least one rod is made of wood, iron or synthetic material.

8. Base materials according to one of claims 6 or 7, **characterized in that** the matrix is industrially prefabricated in iron, or in wood, or in a synthetic material.

9. Base materials according to one of claims 6 to 8, **characterized in that** the rods can create holes in the material of the spherical module.
